(19) Europäisches Patentamt
European Patent Office
Office européen des brevets

(11) **EP 4 412 316 A1**

(12) **EUROPEAN PATENT APPLICATION**
published in accordance with Art. 153(4) EPC

(43) Date of publication:
**07.08.2024 Bulletin 2024/32**

(21) Application number: **22891578.1**

(22) Date of filing: **25.08.2022**

(51) International Patent Classification (IPC):
**H04W 52/02** (2009.01)

(52) Cooperative Patent Classification (CPC):
**H04W 52/02**; Y02D 30/70

(86) International application number:
**PCT/CN2022/114941**

(87) International publication number:
**WO 2023/082772 (19.05.2023 Gazette 2023/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2021 CN 202111333919**

(71) Applicant: ZTE Corporation
**Shenzhen, Guangdong 518057 (CN)**

(72) Inventors:
• **GAO, Minggang**
**Shenzhen, Guangdong 518057 (CN)**
• **DING, Xuemei**
**Shenzhen, Guangdong 518057 (CN)**
• **LEI, Chao**
**Shenzhen, Guangdong 518057 (CN)**
• **SUN, Hongli**
**Shenzhen, Guangdong 518057 (CN)**

(74) Representative: **Boult Wade Tennant LLP**
**Salisbury Square House**
**8 Salisbury Square**
**London EC4Y 8AP (GB)**

(54) **CONTROL METHOD FOR TERMINAL DEVICE, AND TERMINAL DEVICE AND STORAGE MEDIUM**

(57) The present disclosure provides a control method for a terminal device, a terminal device, and a storage medium, and belongs to the field of communication technologies. The method includes: determining whether there is an overlapping control channel unit between a to-be-detected control channel unit set and a target control channel unit set, wherein an aggregation level of the target control channel unit set is lower than an aggregation level of the to-be-detected control channel unit set; and if there is an overlapping control channel unit between the to-be-detected control channel unit set and the target control channel unit set, and that energy of the target control channel unit set is not higher than a predetermined energy threshold, then there being no need to perform energy detection on the to-be-detected control channel unit set.

FIG. 1

**Description**

**CROSS-REFERENCE TO RELATED APPLICATIONS**

The present application claims priority to Chinese Patent Application No. 202111333919.9, filed on November 11, 2021, entitled "control method for terminal device, terminal device, and storage medium", the entire content of which is incorporated herein by reference.

**TECHNICAL FIELD**

Embodiments of the present application relate to the field of communication technologies, and in particular, to a control method for a terminal device, a terminal device, and a storage medium.

**BACKGROUND**

Power consumption of a 5G phone is much higher than that of a 4G phone, and in some cases the network is used to assist the terminal device with endurance optimization, for example, by configuring the terminal device with discontinuous reception (DRX) technology to achieve power savings.

However, the development of DRX technology is now basically mature, and it is difficult to further optimize the endurance of the terminal device, so there is an urgent need in this field to solve the technical problem of how to further optimize the endurance of the terminal device from another perspective.

**SUMMARY**

The present disclosure provides a control method for a terminal device, a terminal device, and a storage medium, and is intended to solve the technical problem of how to further optimize the endurance of the terminal device from another perspective.

In a first aspect, the present disclosure provides a control method for a terminal device, the control method includes: determining whether there is an overlapping control channel unit between a to-be-detected control channel unit set and a target control channel unit set, wherein an aggregation level of the target control channel unit set is lower than an aggregation level of the to-be-detected control channel unit set; and in the case that there is an overlapping control channel unit between the to-be-detected control channel unit set and the target control channel unit set, and that the energy of the target control channel unit set is not higher than a predetermined energy threshold, then there is no need to perform energy detection on the to-be-detected control channel unit set.

In a second aspect, the present disclosure further provides a terminal device, the terminal device includes a processor, a memory, a computer program stored on the memory and executable by the processor, and a data bus for implementing connection communication between the processor and the memory, wherein the computer program when executed by the processor implements the steps of the control method for terminal device, as provided in any embodiment of the description of the present disclosure.

In a third aspect, the present disclosure further provides a storage medium for computer-readable storage, the storage medium storing one or more programs, the one or more programs being executable by one or more processors to implement the steps of the control method for terminal device as provided in any embodiment of the description of the present disclosure.

**BRIEF DESCRIPTION OF THE DRAWINGS**

In order to more clearly illustrate the technical solutions of the present disclosure, the accompanying drawings required for describing the embodiments will be briefly introduced below, and it is obvious that the accompanying drawings involved in the following description are some of the embodiments of the present disclosure, and that for a person of ordinary skill in the art, other accompanying drawings can be obtained based on these drawings without creative labor.

FIG. 1 is a flowchart of a control method for a terminal device provided in the present disclosure.
FIG. 2a is a schematic diagram of the distribution of PDCCH candidate sets for a terminal device provided in the present disclosure.
FIG. 2b is a schematic diagram of the distribution of PDCCH candidate sets for another terminal device provided in the present disclosure.
FIG. 2c is a schematic diagram of the distribution of PDCCH candidate sets for another terminal device provided in the present disclosure.

FIG. 3 is a schematic diagram of the distribution of PDCCH candidate sets for another terminal device provided in the present disclosure.

FIG. 4 is a schematic block diagram of the structure of another terminal device provided in the present disclosure.

## DETAILED DESCRIPTION

The technical solutions in the present disclosure will be described clearly and completely in the following in conjunction with the accompanying drawings of the present disclosure, and it is clear that the embodiments described are a part of the embodiments of the present disclosure and not all of the embodiments. Based on the embodiments in the present disclosure, all other embodiments obtained by a person of ordinary skill in the art without making creative effort fall within the scope of protection of the present disclosure.

The flowchart shown in the accompanying drawings is only an exemplary illustration and is not necessary to include all contents and operations/steps, nor is it necessary to perform them in the order described. For example, some of the operations/steps can also be decomposed, combined or partially merged, and thus the actual order of execution may change depending on the actual situation.

It should be understood that the terminology used herein in this specification is for the sole purpose of describing particular embodiments and is not intended to limit the present disclosure. As used in this specification and in the appended claims, the singular forms "a/an", "one" and "the" are intended to include the plural form unless the context clearly indicates otherwise.

With the large-scale development of the fifth-generation wireless communication network new radio (5G NR), the industrial applications of 5G are also becoming more and more extensive, and in the future, more communication transmissions will rely on 5G wireless technology. However, from the current test results, the power consumption of a 5G phone is much higher than that of a 4G phone, and therefore existing 5G products generally have relatively low endurance.

Power consumption of a 5G phone is much higher than that of a 4G phone, and in most of the mainstream methods, network is used to assist the terminal device with endurance optimization, for example, by configuring the terminal device with discontinuous reception (DRX) technology, so as to enable the terminal device to periodically enter a "sleep" state and stop monitoring the physical downlink control channel (PDCCH) and stop receiving the corresponding data transmission, thereby reducing power consumption and achieving the purpose of power saving.

However, the development of DRX technology is now basically mature, and it is difficult to further optimize the endurance of the terminal device, so there is an urgent need to further optimize the endurance of the terminal device from another perspective.

First, in order to better understand the solutions of the present disclosure, the technical problems existing in the prior art are first described below.

Generally speaking, one search space includes multiple physical downlink control channel candidate (PDCCH Candidate) sets, and since the purpose of terminal device is to acquire valid information of physical downlink control channel (PDCCH), so as to realize operations such as information interaction between terminal devices or software download of terminal devices. However, the terminal device does not know which PDCCH candidate set the valid PDCCH information exists in, therefore, every time before receiving downlink data, the terminal device needs to detect the physical downlink control channel to acquire resource information of a data channel, i.e., a physical downlink shared channel, and the terminal needs to blindly detect the PDCCH channel for candidate sets of different aggregation levels until the PDCCH candidate set is decoded successfully. This blind detection method is relatively low in efficiency, and increases the power consumption of the terminal device.

The present disclosure provides a control method for a terminal device, a terminal device, and a storage medium. Herein, the control method can be applied to the terminal device, so that the number of invalid detections can be reduced, thereby reducing the amount of computation and power consumption of the terminal device, and thereby further optimizing the endurance of the terminal device.

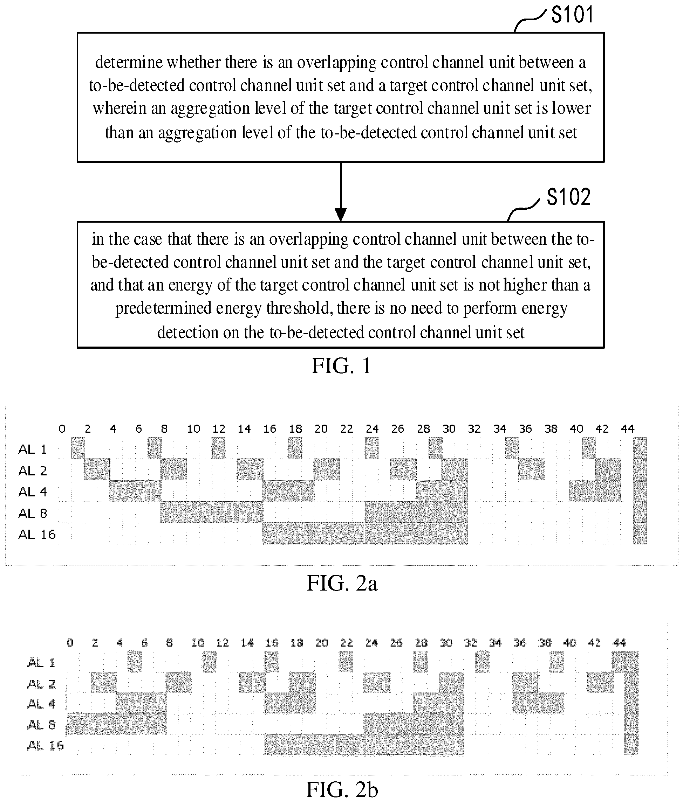

Referring to FIG. 1, which is a flowchart of a control method for a terminal device provided in an embodiment of the present disclosure. The control method for a terminal device is configured to control whether to perform a detection on a to-be-detected control channel unit set or not, and the control method for the terminal device can be specifically applied in a server.

As shown in FIG. 1, the control method for a terminal device includes steps S101 to S102.

At step S101, whether there is an overlapping control channel unit between a to-be-detected control channel unit set and a target control channel unit set is determined, wherein an aggregation level of the target control channel unit set is lower than an aggregation level of the to-be-detected control channel unit set.

In a 5G NR system, a PDCCH is mainly used to transmit downlink control information (DCI) and uplink grant (UL Grant), so that a terminal device can correctly receive a physical downlink shared channel (PDSCH) and allocate uplink resources for physical uplink shared channel (PUSCH). A PDCCH consists of one or more consecutive control channel element (CCE), and transmits only one type of downlink control information (DCI) format without multiplexing, the number of CCEs allocated is equal to the aggregation level, and the aggregation level (AL) may be divided into five levels: 1, 2, 4, 8 and 16.

The control channel unit set is a set of possible CCE indexes corresponding to one aggregation level, i.e., a PDCCH candidate set, including one or more consecutive control channel units. The to-be-detected control channel unit set is a PDCCH candidate set to be detected, and the target control channel unit set is a PDCCH candidate set with an aggregation level lower than the aggregation level of the to-be-detected control channel unit set.

In some embodiments, before determining whether there is an overlapping control channel unit between a to-be-detected control channel unit set and a target control channel unit set, a target control channel unit is determined based on an aggregation level of each control channel unit set, wherein the aggregation level of the target control channel unit is lower than the aggregation level of other sets of other control channel units; energy detection is performed on the target control channel unit set, if the energy of the target control channel unit set is higher than a predetermined energy threshold, then decoding of the target control channel unit set is performed; if the target control channel unit set is decoded successfully, there is no need to carry out energy detection of the to-be-detected control channel unit set. As a result, the energy detection and decoding can be first performed on the control channel unit set with lowest aggregation level, and if the decoding is successful, there is no need to carry out energy detection on the to-be-detected control channel unit set, so as to quickly obtain PDCCH valid information.

The aggregation level of the target control channel unit is lower than an aggregation level of other sets of other control channel units, and generally the target control channel unit is a control channel unit set with an aggregation level of 1.

In some exemplary embodiments, energy detection is performed sequentially on the target control channel unit set (at this time, the target control channel unit set is a control channel unit set with an aggregation level of 1), and if there is a control channel unit set with the energy higher than a predetermined energy threshold in the target control channel unit set, it can be assumed that there may be PDCCH valid information in the control channel unit set, and the control channel unit set is decoded; if the decoding of the control channel unit set is successful, there is no need to perform energy detection on the to-be-detected control channel unit set; if the decoding of the control channel unit set is unsuccessful, then the energy detection is performed on a next control channel unit set in the target control channel unit set; and when all sets of control channel units in the target control channel unit set have been detected and decoded unsuccessfully, energy detection is performed on the to-be-detected control channel unit set.

If there is no control channel unit set with energy higher than the predetermined energy threshold in the target control channel unit set, it can be assumed that PDCCH valid information exists in none of the sets of control channel units in the target control channel unit set, and there is no need to decode the sets of control channel units in the target control channel unit set, and energy detection is performed on the to-be-detected control channel unit set.

In an exemplary embodiment, decoding a control channel unit set can be performed by a cyclic redundancy check (CRC) code, which is one of the most commonly used error-checking code in the field of data communication, and checking by CRC can determine whether there is PDCCH valid information in the control channel unit set.

In some embodiments, before determining a target control channel unit set based on an aggregation level of each control channel unit set, a configuration parameter of a control resource set corresponding to a predetermined search space is acquired, and a set of aggregation levels corresponding to the predetermined search space is determined; and one or more sets of control channel units at each aggregation level is determined based on the configuration parameter and the set of aggregation levels.

The predetermined search space includes a specific search space and a public search space, and the control resource set (CORESET) is used to store a time-frequency position of the control information transmitted by the PDCCH. Generally speaking, firstly the type of search space, which may include common search space (CSS) and user equipment (UE)-specific search space (USS), is determined. CSS is mainly used during UE access and cell switching, while USS is mainly used after UE access. Configuration parameters corresponding to different search space types are different, and the control resource set and the search space are in a one-to-multiple relationship, i.e., one control resource set can be associated with multiple search spaces, but each search space can be associated with only one control resource set. Since the specific search space and the public search space have different roles in different situations, the set of aggregation levels contained in each of them are different, and in the specific search space, the values of the set of aggregation levels include 1, 2, 4, 8 and 16. In the public search space, the values of the set of aggregation level include only 4, 8 and 16. The PDCCH candidate sets and the number of PDCCH candidate sets contained in different sets of aggregation levels are also different.

It should be noted that the present disclosure is mainly intended to obtain PDCCH valid information through the minimum number of detections, which mostly need to be used after UE access, so the type of search space that the embodiments of the present application are mainly directed to is USS, and similarly, CSS is applicable to the embodiments of the present application as well.

In an exemplary embodiment, illustrated by the example that the type of search space for the embodiments of the present application is USS, the corresponding set of aggregation levels thus takes values including 1, 2, 4, 8 and 16.

Exemplarily, Table 1 shows a table of configuration parameters of the control resource set corresponding to a specific search space.

Table 1

| Coreset ID | Coreset Frequency Domain RBs | $n_{CI}$ | SCS | PDCCH candidates AL1 | PDCCH candidates AL2 | PDCCH candidates AL4 | PDCCH candidates AL8 | PDCCH candidates AL16 |
|---|---|---|---|---|---|---|---|---|
| 1 | 270 | 0 | 30kHZ | 8 | 8 | 4 | 2 | 1 |

As shown in Table 1, the table of configuration parameters of the control resource set corresponding to the specific search space may include the Coreset ID for configuration, the Coreset ID may indicate the control resource set bound to this search space, Coreset Frequency Domain RBs is used for indicating a frequency domain position of the CORESET, $n_{CI}$ is cross carrier indication, a sub-carrier space (SCS) may be 30kHZ, PDCCH candidates AL1 is used for indicating the number of PDCCH candidate sets with an aggregation level of 1, and similarly, the number of PDCCH candidate sets corresponding to each aggregation level is set. The parameter category and parameter magnitude of the configuration parameters of the control resource set can be set according to the needs and are not specifically limited here.

Finally, one or more sets of control channel units at each aggregation level is determined based on the configuration parameters and the set of aggregation levels. The UE determines the control channel units occupied by each PDCCH candidate set based on the configuration parameters and the set of aggregation levels and in conjunction with the candidate set expression. The calculation expression for the PDCCH candidate set is shown below:

$$L \cdot \left\{ \left( Y_{p,n_{s,f}^{\mu}} + \left\lfloor \frac{m_{s,n_{CI}} \cdot N_{CCE,p}}{L \cdot M_{s,\max}^{(L)}} \right\rfloor + n_{CI} \right) \bmod \left\lfloor N_{CCE,p} / L \right\rfloor \right\} + i$$

wherein, i=0, ......, L-1; L denotes the aggregation level; Y denotes the frequency domain starting position of the PDCCH candidate set; $N_{CCE,p}$ denotes the number of CCE in a control resource set p, and is numbered from 0; $n_{CI}$ is the cross carrier indication; $m_{s,nCI}$ denotes the candidate set indication in the search space s;

$m_{s,\ n_{CI}} = 0, \ldots\ldots, m_{s,\ n_{CI}}^{(L)} - 1,\ m_{s,\ n_{CI}}^{(L)}$ denotes the number of PDCCH candidate sets corresponding to nCI at aggregation level L, and $m_{s,\ \max}^{(L)}$ is the maximum value of $m_{s,\ n_{CI}}^{(L)}$ in all $n_{CI}$ configurations.

According to this candidate set calculation expression, the starting positions of all possible CCEs can be calculated, because that the candidate time-frequency positions of the to-be-detected control channel unit set can be obtained by a consecutive arrangement of CCEs, i.e., the positions of the control channel units that are occupied by the PDCCH candidate set, and specifically the indexes of the control channel units.

For USS, each terminal is uniquely allocated a cell-radio network temporary identifier (C-RNTI) by the network, and this C-RNTI is unique in a particular base station. Although the C-RNTI is unique, the above candidate set expression is not a linear function, therefore the PDCCH candidate sets obtained at different ALs are not completely independent and unique.

Referring to FIG. 2a-FIG. 2c, which illustrate the distribution of PDCCH candidate sets for the same UE under different C-RNTIs according to the above configuration parameters, respectively.

In an exemplary embodiment, Table 2 shows the distribution of PDCCH candidate sets for a UE with a C-RNTI of 65519.

Table 2

| PDCCH Search Candidate Set Number | AL1 Start | AL1 ENd | AL2 Start | AL2 ENd | AL4 Start | AL4 ENd | AL8 Start | AL8 ENd | AL16 Start | AL16 ENd |
|---|---|---|---|---|---|---|---|---|---|---|
| 0 | 1 | 1 | 2 | 3 | 4 | 7 | 8 | 15 | 16 | 31 |

(continued)

| PDCCH Search Candidate Set Number | AL1 Start | AL1 ENd | AL2 Start | AL2 ENd | AL4 Start | AL4 ENd | AL8 Start | AL8 ENd | AL16 Start | AL16 ENd |
|---|---|---|---|---|---|---|---|---|---|---|
| 1 | 7 | 7 | 8 | 9 | 16 | 19 | 24 | 31 | | |
| 2 | 12 | 12 | 14 | 15 | 28 | 31 | | | | |
| 3 | 18 | 18 | 20 | 21 | 40 | 43 | | | | |
| 4 | 24 | 24 | 26 | 27 | | | | | | |
| 5 | 29 | 29 | 30 | 31 | | | | | | |
| 6 | 35 | 35 | 36 | 37 | | | | | | |
| 7 | 41 | 41 | 42 | 43 | | | | | | |

A corresponding graphical example of Table 2 is shown in FIG. 2a.

Table 3 shows the distribution of PDCCH candidate sets for a UE with a C-RNTI of 65509.

Table 3

| PDCCH Search Candidate Set Number | AL1 Start | AL1 ENd | AL2 Start | AL2 ENd | AL4 Start | AL4 ENd | AL8 Start | AL8 ENd | AL16 Start | AL16 ENd |
|---|---|---|---|---|---|---|---|---|---|---|
| 0 | 5 | 5 | 2 | 3 | 4 | 7 | 0 | 7 | 16 | 31 |
| 1 | 11 | 11 | 8 | 9 | 16 | 19 | 24 | 31 | | |
| 2 | 16 | 16 | 14 | 15 | 28 | 31 | | | | |
| 3 | 22 | 22 | 18 | 19 | 36 | 39 | | | | |
| 4 | 28 | 28 | 24 | 25 | | | | | | |
| 5 | 33 | 33 | 30 | 31 | | | | | | |
| 6 | 39 | 39 | 36 | 37 | | | | | | |
| 7 | 44 | 44 | 42 | 43 | | | | | | |

A corresponding graphical example of Table 3 is shown in FIG. 2b.

Table 4 shows the distribution of PDCCH candidate sets for a UE with a C-RNTI of 1.

Table 4

| PDCCH Search Candidate Set Number | AL1 Start | AL1 ENd | AL2 Start | AL2 ENd | AL4 Start | AL4 ENd | AL8 Start | AL8 ENd | AL16 Start | AL16 ENd |
|---|---|---|---|---|---|---|---|---|---|---|
| 0 | 2 | 2 | 0 | 1 | 0 | 3 | 0 | 7 | 0 | 15 |
| 1 | 8 | 8 | 6 | 7 | 12 | 15 | 16 | 23 | | |
| 2 | 13 | 13 | 12 | 13 | 20 | 23 | | | | |
| 3 | 19 | 19 | 16 | 17 | 32 | 35 | | | | |
| 4 | 25 | 25 | 22 | 23 | | | | | | |
| 5 | 30 | 30 | 28 | 29 | | | | | | |
| 6 | 36 | 36 | 32 | 33 | | | | | | |
| 7 | 41 | 41 | 38 | 39 | | | | | | |

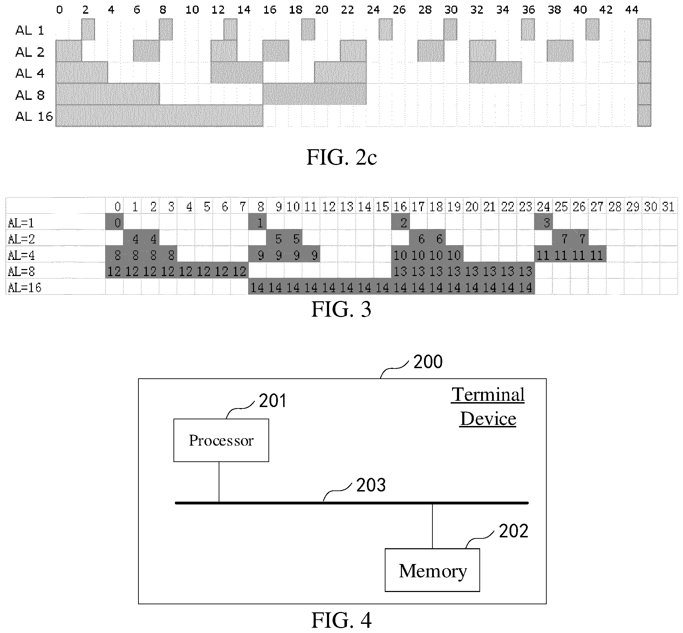

A corresponding graphical example of Table 4 is shown in FIG. 2c.

As shown in FIG. 2a, FIG. 2b and FIG. 2c, regardless of the C-RNTI of the UE, the positions of the control channel units occupied by the candidate set with high aggregation level and the candidate set with low aggregation level are overlapped, i.e., there will be overlapping control channel units. At the same time, it is certain that there is no control channel unit set overlapped with the control channel unit set with the lowest aggregation level (i.e., aggregation level of 1). Therefore, energy detection and decoding can be carried out on the control channel unit set with the lowest aggregation level first, and thus the control channel unit set with the lowest aggregation level has to be detected individually first, while laying foundation for reducing the number of invalid detections subsequently.

In some embodiments, a candidate time-frequency position corresponding to one or more sets of control channel units at each aggregation level is determined; based on the candidate time-frequency position and the aggregation level, the one or more sets of control channel units at each aggregation level are sorted, and a sorting result is obtained; and based on the sorting result, the one or more sets of control channel units at each aggregation level are detected sequentially. Thus, it is possible to sequentially sort the one or more sets of control channel units at each aggregation level based on the candidate time-frequency position and the aggregation level, and detect the sets of control channel units one by one, thereby facilitating subsequent recording of the energy value and the detection result of each control channel unit set.

In an exemplary embodiment, as shown in FIG. 3, four sets of control channel units with an aggregation level of 1 can be first sorted according to the candidate time-frequency position, such that the control channel unit set with a candidate time-frequency position at 0 can be numbered 0, the control channel unit set with a candidate time-frequency position at 8 can be numbered 1, and similarly, after that the control channel unit set with the aggregation level of 1 is sorted, the sets of control channel units with an aggregation level of 2, with an aggregation level of 4, with an aggregation level of 8, and with an aggregation level of 16 are then sequentially sorted, so that all the sets of control channel units are numbered and detected sequentially according to the numbering.

In some embodiments, before determining whether there is an overlapping control channel unit between the to-be-detected control channel unit set and the target control channel unit set, whether the signal strength of the terminal device exceeds a predetermined signal strength threshold is detected; in the case that the signal strength of the terminal device is detected to exceed the predetermined signal strength threshold, whether there is an overlapping control channel unit between the to-be-detected control channel unit set and the target control channel unit set is determined. As a result, the signal strength of the terminal device can be detected first, and when the signal of the terminal device is sound, the influence of interference on the energy monitoring is relatively small, and whether it is necessary to decode the control channel unit can be determined relatively accurately, so as to improve the efficiency and accuracy of querying PDCCH valid information.

The predetermined signal strength threshold may be -95dBm or any value, without specific limitations herein.

In an exemplary embodiment, whether the signal strength of the terminal device exceeds a predetermined signal strength threshold is detected; in the case that the signal strength of the terminal device is detected to exceed the predetermined signal strength threshold, it is determined whether there is an overlapping control channel unit between the to-be-detected control channel unit set and the target control channel unit set; if there is an overlapping control channel unit between the to-be-detected control channel unit set and the target control channel unit set, and the energy of the target control channel unit set is not higher than a predetermined energy threshold, there is no need to perform energy detection on the to-be-detected control channel unit set; and in the case that the signal strength of the terminal device is detected to not exceed the predetermined signal strength threshold, blind detection is performed on the to-be-detected control channel unit set and the target control channel unit set.

Since the signal strength affects the accuracy of the energy detection, the better the signal, the more accurate the energy detection, and the worse the signal, the less accurate the energy detection. Therefore, in order to improve the efficiency of the present solution in obtaining the PDCCH valid information, it can be used in the case where the signal conditions are good, and if the signal conditions are poor, a blind detection in certain circumstances can be used for the PDCCH candidate set.

At step S102, in the case that there is an overlapping control channel unit between the to-be-detected control channel unit set and the target control channel unit set, and that the energy of the target control channel unit set is not higher than a predetermined energy threshold, there is no need to perform an energy detection on the to-be-detected control channel unit set.

In the case that the energy of the target control channel unit set is not higher than the predetermined energy threshold, it can be considered that there is no PDCCH valid information in the target control channel unit set, and at the same time, in the case that it is detected that both the control channel unit set and the target control channel unit set occupy the same candidate time-frequency position, it can also be considered that there is no PDCCH valid information in the to-be-detected control channel unit set; then there is no need to detect the to-be-detected control channel unit set. Compared to the existing blind detection method, the number of invalid detections can be reduced, thereby reducing the amount of computation and power consumption of the terminal device.

In some embodiments, in the case that there is no overlapping control channel unit between the to-be-detected control channel unit set and the target control channel unit set, the to-be-detected control channel unit set is taken as the target control channel unit set; energy detection is performed on the target control channel unit set; and in the case that the energy of the target control channel unit set is higher than the predetermined energy threshold, the target control channel unit set is decoded.

Since the to-be-detected control channel unit set and the target control channel unit set do not have overlapping control channel units, at this time, the to-be-detected control channel unit set needs individual energy detection and attempt to decoding, the to-be-detected control channel unit set can be used as the target control channel unit set, and then energy detection is performed on the target control channel unit set sequentially, and in the case that the energy of the target control channel unit set is higher than the predetermined energy threshold, the target control channel unit set is decoded; if the target control channel unit set is decoded successfully, there is no need to perform energy detection on the to-be-detected control channel unit set.

It is to be noted that the target control channel unit set at this time includes not only the sets of control channel units with an aggregation level of 1, but also the sets of to-be-detected control channel units among the control channel units that do not overlap with the target control channel unit set at that time. Exemplarily, as shown in FIG. 3, in the case that the to-be-detected control channel unit set is a control channel unit set with an aggregation level of 2, at this point, the target control channel unit set is a control channel unit set with an aggregation level of 1. However, as can be seen from FIG. 3, there is no overlapping control channel unit between the control channel unit set with an aggregation level of 2 and the control channel unit set with an aggregation level of 1. Therefore, in the case that the to-be-detected control channel unit set is a control channel unit set with an aggregation level of 2, the set of target control channel unit set includes a control channel unit set with an aggregation level of 1 and a control channel unit set with an aggregation level of 2, and so on.

In some exemplary embodiments, energy detection is performed sequentially on the target control channel unit set, and if there is a control channel unit set with energy higher than a predetermined energy threshold in the target control channel unit set that , it can be assumed that there may be PDCCH valid information in the control channel unit set, and decoding of the control channel unit set can be carried out; if the decoding of the control channel unit set is successful, there is no need to perform energy detection on the to-be-detected control channel unit set, and if the decoding of the control channel unit set is unsuccessful, then energy detection is performed on the next control channel unit set in the target control channel unit set, and when all sets of control channel units in the target control channel unit set have been detected and decoded unsuccessfully, then energy detection is performed on the to-be-detected control channel unit set.

If no control channel unit set in the target control channel unit set has energy higher than the predetermined energy threshold, it can be assumed that none of the sets of control channel units in the target control channel unit set may have PDCCH valid information, and there is no need to decode the sets of control channel units in the target control channel unit set, and energy detection is performed on the to-be-detected control channel unit set.

It is noted that after energy detection or attempted decoding has been carried out on each control channel unit set, the energy values and decoding results can be saved for querying of the energy values and reviewing the results subsequently.

In some embodiments, in the case that there is an overlapping control channel unit between the to-be-detected control channel unit set and the target control channel unit set, and that the energy of the target control channel unit set is higher than the predetermined energy threshold, energy detection is performed on the to-be-detected control channel unit set; and in the case that the energy of the to-be-detected control channel unit set is higher than the predetermined energy threshold, the to-be-detected control channel unit set is decoded.

Since the energy of the target control channel unit set is higher than the predetermined energy threshold but decoding is not successful, whether the to-be-detected control channel unit set contains PDCCH valid information cannot be determined, so it is necessary to perform energy detection and decoding on the to-be-detected control channel unit set, so as to determine whether the to-be-detected control channel unit set contains PDCCH valid information.

In some embodiments, the target control channel unit set includes a first control channel unit set and a second control channel unit set, the first control channel unit set having an aggregation level that is lower than an aggregation level of the second control channel unit set, and the second control channel unit set having an aggregation level that is lower than an aggregation level of the to-be-detected control channel unit set. Whether there is an overlapping control channel unit between the to-be-detected control channel unit set and the first control channel unit set and/or the second control channel unit set is determined; in the case that there is an overlapping control channel unit between the to-be-detected control channel unit set and the first control channel unit set and the energy of the first control channel unit set is not higher than the predetermined energy threshold, there is no need to perform energy detection on the to-be-detected control channel unit set; in the case that there is an overlapping control channel unit between the to-be-detected control channel unit set and the second control channel unit set and the energy of the second control channel unit set is not higher than the predetermined energy threshold, there is no need to perform energy detection on the to-be-detected control channel unit set; and in the case that there is an overlapping control channel unit both between the to-be-detected control channel unit set and the first control channel unit set and between the to-be-detected control channel unit set and the second control channel unit set respectively, and each of the energy of the first control channel unit set and the energy of the second control channel unit set is not higher than the predetermined energy threshold, there is no need to perform energy detection on the to-be-detected control channel unit set.

In an exemplary embodiment, the first control channel unit set can be a control channel unit set with an aggregation level of 1, the second control channel unit set can be a control channel unit set with an aggregation level of 2, and the to-be-detected control channel unit set can be a control channel unit set with an aggregation level of 4.

In the case that there is an overlapping control channel unit between the to-be-detected control channel unit set and the first control channel unit set, and that the energy of the first control channel unit set is not higher than the predetermined energy threshold, it may also be assumed that the to-be-detected control channel unit set does not have PDCCH valid information, i.e., there is no need to perform an energy detection on the to-be-detected control channel unit set.

In the case that there is an overlapping control channel unit between the to-be-detected control channel unit set and the second control channel unit set, and that the energy of the second control channel unit set is not higher than the predetermined energy threshold, it may also be assumed that the to-be-detected control channel unit set does not have PDCCH valid information, i.e., there is no need to perform an energy detection on the to-be-detected control channel unit set.

In the case that there is an overlapping control channel unit both between the to-be-detected control channel unit set and the first control channel unit set and between the to-be-detected control channel unit set and the second control channel unit set respectively, and each of the energy of the first control channel unit set and the energy of the second control channel unit set is not higher than the predetermined energy threshold, it may also be assumed that the to-be-detected control channel unit set does not have PDCCH valid information, i.e., there is no need to perform an energy detection on the to-be-detected control channel unit set.

An embodiment of the present application may be illustrated below in conjunction with FIG. 3. As shown in FIG. 3, it can be seen that there are normally 15 candidate sets, assuming that the PDCCH valid information is in the PDCCH candidate set numbered 14.

First, a control channel unit set at each aggregation level is determined, and the control channel unit set at each aggregation level is numbered based on the candidate time-frequency position and the aggregation level, as shown in FIG. 3.

Then, whether the signal strength of a terminal device exceeds a predetermined signal strength threshold is detected; in the case that the signal strength of the terminal device is detected to exceed a predetermined signal strength threshold, detection of the control channel unit set at each aggregation level can be started.

Since the aggregation level of the control channel unit set with the aggregation level of 1 is lower than those of other sets of control channel units, the control channel unit set with the aggregation level of 1 is detected first, and the specific detection results are shown in Table 5. Table 5 shows the detection results of the control channel unit set with an aggregation level of 1.

Table 5

| Detection Serial Number | Number of PDCCH Candidate Set | Whether There is Need for Detection | Whether Detected Energy Value Is Higher than Predetermined Energy Threshold | Whether Decoding Is Successful |
|---|---|---|---|---|
| 1 | 0 | yes | no | no need for decoding |
| 2 | 1 | yes | yes | decoding unsuccessful |
| 3 | 2 | yes | yes | decoding unsuccessful |
| 4 | 3 | yes | no | no need for decoding |

Since the energy values of the PDCCH candidate sets numbered 0 and numbered 3 are not higher than the predetermined energy threshold respectively, it can be determined that the PDCCH valid information is not in these two PDCCH candidate sets, and therefore there is no need to decode these two PDCCH candidate sets.

Since all the control channel unit set with an aggregation level of 1 is not decoded successfully after detection ,

the control channel unit set with an aggregation level of 2 needs to be detected.

Table 6 shows the detection results of the control channel unit set with an aggregation level of 2.

Table 6

| Detection Serial Number | Number of PDCCH Candidate Set | Whether There Is Need for Detection | Whether Detected Energy Value Is Higher than Predetermined Energy Threshold | Whether Decoding Is Successful |
|---|---|---|---|---|
| 5 | 4 | yes | no | no need for decoding |
| 6 | 5 | yes | yes | decoding unsuccessful |
| 7 | 6 | yes | yes | decoding unsuccessful |
| 8 | 7 | yes | no | no need for decoding |

Since the control channel unit set with an aggregation level of 2 and the control channel unit set with an aggregation level of 1 do not have overlapping control channel units, it is necessary to detect each PDCCH candidate set at the aggregation level of 2.

Since all the control channel unit set with the aggregation level of 2 is not decoded successfully after detection, the control channel unit set with an aggregation level of 4 needs to be detected.

Table 7 shows the detection results of the control channel unit set with an aggregation level of 4.

Table 7

| Detection Serial Number | Number of PDCCH Candidate Set | Whether There is Need for Detection | Whether Detected Energy Value Is Higher than Predetermined Energy Threshold | Whether Decoding Is Successful |
|---|---|---|---|---|
| 9 | 8 | no | | |
| 10 | 9 | yes | yes | decoding unsuccessful |
| 11 | 10 | yes | yes | decoding unsuccessful |
| 12 | 11 | no | | |

Since the PDCCH candidate set numbered 8 has overlapping control channel units with both the PDCCH candidate set numbered 0 and with the PDCCH candidate set numbered 4, and the energy of the PDCCH candidate set numbered 0 and energy of the PDCCH candidate set numbered 4 are both not higher than the predetermined energy threshold, there is no need to detect the PDCCH candidate set numbered 8.

Since all the control channel unit set with the aggregation level of 4 is not decoded successfully after detection, the control channel unit set with an aggregation level of 8 needs to be detected.

Table 8 shows the detection results of the control channel unit set with an aggregation level of 8.

Table 8

| Detection Serial Number | Number of PDCCH Candidate Set | Whether There is Need for Detection | Whether Detected Energy Value Is Higher than Predetermined Energy Threshold | Whether Decoding Is Successful |
|---|---|---|---|---|
| 13 | 12 | no | | |
| 14 | 13 | yes | yes | decoding unsuccessful |

Since the PDCCH candidate set numbered 13 has overlapping control channel units with the PDCCH candidate set numbered 8, and the energy of the PDCCH candidate set numbered 8 is not higher than the predetermined energy threshold, there is no need to detect the PDCCH candidate set numbered 13.

Since all the control channel unit set with an aggregation level of 8 is not decoded successfully after detection, the control channel unit set with an aggregation level of 16 needs to be detected.

Table 9 shows the detection results of the control channel unit set with an aggregation level of 16.

Table 9

| Detection Serial Number | Number of PDCCH Candidate Set | Whether There is Need for Detection | Whether Detected Energy Value Is Higher than Predetermined Energy Threshold | Whether Decoding Is Successful |
|---|---|---|---|---|
| 15 | 14 | yes | yes | decoding successful |

Finally, the PDCCH candidate set numbered 14 is decoded successfully, thus the PDCCH valid information is obtained. Since there are 15 candidate sets, the worst case is that the terminal device needs to detect all 15 PDCCH candidate sets to get the PDCCH valid information, and thus 15 times of detection is needed, whereas with the solution of the present application, only 12 times of detection is needed to get the PDCCH valid information, the number of invalid detections can be reduced, thereby reducing the amount of computation and power consumption of the terminal device. Moreover, the energy value can be detected before attempt to decoding, which can reduce useless decoding attempts and improve the detection efficiency, thereby achieving the effect of reducing the amount of computation and power consumption of the terminal device.

Referring to FIG. 4, which is a schematic block diagram of the structure of a terminal device provided in the present disclosure.

As shown in FIG. 4, the terminal device 200 includes a processor 201 and a memory 202, and the processor 201 and the memory 202 are connected via a bus 203, which is, for example, an I2C (Inter-integrated Circuit) bus.

In an exemplary embodiment, the processor 201 is used to provide computing and control capabilities to support the operation of the entire terminal device. The processor 301 may be a Central Processing Unit (CPU), which may also be another general purpose processor, a Digital Signal Processor (DSP), an Application Specific Integrated Circuit (ASIC), a Field-Programmable Gate Array (FPGA), or other programmable logic device, discrete gate or transistor logic device, discrete hardware component, and the like. The general purpose processor may be a microprocessor or the processor may be any conventional processor, etc.

In an exemplary embodiment, the memory 202 may be a Flash chip, a read-only memory (ROM), a disk, a CD-ROM, a USB flash drive, or a removable hard drive, etc.

It will be understood by those skilled in the art that the structure illustrated in FIG. 4, which is only a block diagram of a portion of the structure related to the solution of the present disclosure, and does not constitute a limitation on the terminal device to which the solution of the present disclosure is applied, and that specific servers may comprise more or fewer components than those shown in the drawing, or may combine some of the components, or may have a different arrangement of components.

The processor is used to run a computer program stored in the memory and to implement a control method for a terminal device provided by any one of the present disclosure in the execution of the computer program.

In an embodiment, the processor is used to run a computer program stored in the memory and to implement the following steps in executing the computer program:

determining whether there is an overlapping control channel unit between a to-be-detected control channel unit set and a target control channel unit set, wherein an aggregation level of the target control channel unit set is lower than an aggregation level of the to-be-detected control channel unit set; and in the case that there is an overlapping control channel unit between the to-be-detected control channel unit set and the target control channel unit set, and that the energy of the target control channel unit set is not higher than a predetermined energy threshold, there is no need to perform energy detection on the to-be-detected control channel unit set.

In an embodiment, the processor, in realizing the determining a corresponding SAR value of each of the antennas based on the distance and the frequency band, is used to realize: determining antenna gain corresponding to the antenna according to the operating frequency band and based on a first predetermined correspondence table, the first predetermined correspondence table recording the correspondence between the operating frequency band and the antenna gain; acquiring a target power value and determining the omni-directional radiated power of the antenna according to the antenna gain and the target power value; acquiring a second predetermined correspondence table corresponding to the omni-directional radiated power; based on the second predetermined correspondence table, determining a corresponding SAR value of each of the antennas based on the distance, and the second predetermined correspondence table recording a correspondence between the distance and the SAR value.

In an embodiment, the processor, before determining whether there is an overlapping control channel unit between a to-be-detected control channel unit set and a target control channel unit set, is used to implement: determining a target control channel unit based on an aggregation level of each control channel unit set, wherein the aggregation level of the target control channel unit is lower than the aggregation level of other sets of other control channel units; performing an energy detection of the target control channel unit set, if the energy of the target control channel unit set is higher than a predetermined energy threshold, then decoding of the target control channel unit set is performed; and if the target control channel unit set is decoded successfully, there being no need to perform energy detection on the to-be-detected control channel unit set.

In an embodiment, the processor, after determining whether there is an overlapping control channel unit between the to-be-detected control channel unit set and the target control channel unit set, is used to implement: in the case that there is no overlapping control channel unit between the to-be-detected control channel unit set and the target control channel unit set, taking the to-be-detected control channel unit set as the target control channel unit set; performing an energy detection on the target control channel unit set; and in the case that the energy of the target control channel unit set is higher than the predetermined energy threshold, decoding the target control channel unit set.

In an embodiment, the processor, after realizing that in the case that there is an overlapping control channel unit between the to-be-detected control channel unit set and the target control channel unit set, is used to implement: in the case that the energy of the target control channel unit set is higher than the predetermined energy threshold, performing an energy detection on the to-be-detected control channel unit set; and in the case that the energy of the to-be-detected control channel unit set is higher than the predetermined energy threshold, decoding the to-be-detected control channel unit set.

In an embodiment, the processor is used to implement: determining whether there is an overlapping control channel unit between the to-be-detected control channel unit set and the first control channel unit set and/or the second control channel unit set; and in the case that there is an overlapping control channel unit between the to-be-detected control channel unit set and the first control channel unit set and the energy of the first control channel unit set is not higher than the predetermined energy threshold, there is no need to perform energy detection on the to-be-detected control channel unit set; or in the case that there is an overlapping control channel unit between the to-be-detected control channel unit set and the second control channel unit set and the energy of the second control channel unit set is not higher than the predetermined energy threshold, there is no need to perform energy detection on the to-be-detected control channel unit set; or in the case that there is an overlapping control channel unit both between the to-be-detected control channel unit set and the first control channel unit set and between the to-be-detected control channel unit set and the second control channel unit set respectively, and each of the energy of the first control channel unit set and the energy of the second control channel unit set is not higher than the predetermined energy threshold, there is no need to perform energy detection on the to-be-detected control channel unit set.

In an embodiment, the processor, in implementing the determining a control channel unit set at each aggregation level, is used to implement: acquiring a configuration parameter of a control resource set corresponding to a predetermined search space, and determining a set of aggregation levels corresponding to the predetermined search space; and determining one or more sets of control channel units at each aggregation level based on the configuration parameter and the set of aggregation levels.

In an embodiment, the processor, after implementing the determining a control channel unit set at each aggregation level, is used to implement: determining a candidate time-frequency position corresponding to one or more sets of control channel units at each aggregation level; based on the candidate time-frequency position and the aggregation level, sorting the one or more sets of control channel units at each aggregation level, to obtain a sorting result; and based on the sorting result, detecting the one or more sets of control channel units at each aggregation level sequentially.

In an embodiment, the processor, before determining whether there is an overlapping control channel unit between the to-be-detected control channel unit set and the target control channel unit set, is used to implement: detecting whether the signal strength of a terminal device exceeds a predetermined signal strength threshold; in the case that the signal strength of the terminal device is detected to exceed the predetermined signal strength threshold, determining whether there is an overlapping control channel unit between the to-be-detected control channel unit set and the target control channel unit set.

In an embodiment, the processor, after detecting whether the signal strength of a terminal device exceeds a predetermined signal strength threshold, is used to implement: in the case that the signal strength of the terminal device is detected to not exceed the predetermined signal strength threshold, blind detecting the to-be-detected control channel unit set and the target control channel unit set.

It is to be noted that a person skilled in the field can clearly understand that, for the convenience and brevity of description, the specific operation process of the terminal device described above can refer to the corresponding process in the foregoing embodiments of the control method for a terminal device, and will not be repeated herein.

The present disclosure further provides a storage medium for computer-readable storage, the storage medium storing one or more programs, the one or more programs being executable by one or more processors to implement the steps any of the control methods for terminal device as provided by the description of the present disclosure.

The storage medium may be an internal storage unit of the terminal device as described in the foregoing embodiments, such as a hard disk or memory of the terminal device. The storage medium may also be an external storage device of the terminal device, such as a plug-in hard disk equipped on the terminal device, a Smart Media Card (SMC), a Secure Digital (SD) card, a Flash Card, and the like.

A person of ordinary skill in the art may understand that all or some steps of the methods disclosed above, systems, and functional modules/units in the apparatuses may be implemented as software, firmware, hardware, and suitable combinations thereof. In hardware embodiments, the division between the functional modules/units referred to in the above description does not necessarily correspond to a division of physical components; for example, a physical component may have multiple functions, or a function or step may be cooperatively performed by several physical components. Some or all of the physical components may be implemented as software executed by a processor, such as a central processor, a digital signal processor, or a microprocessor, or as hardware, or as integrated circuits, such as specialized integrated circuits. Such software may be distributed on a computer-readable medium, which may include a computer storage medium (or non-transitory medium) and a communication medium (or transitory medium). As is well known to those of ordinary skill in the art, the term computer storage medium includes volatile and non-volatile, removable and non-removable media implemented in any method or technique for storing information (such as computer-readable instructions, data structures, program modules, or other data). Computer storage media include, but are not limited to, RAM, ROM, EEPROM, flash memory or other memory technology, CD-ROM, Digital Versatile Disk (DVD) or other optical disk storage, magnetic cartridges, magnetic tapes, magnetic disk storage, or other magnetic storage devices, or any other media that can be used to store desired information and that can be accessed by a computer. In addition, it is well known to those of ordinary skill in the art that communication media typically contain computer-readable instructions, data structures, program modules, or other data in modulated data signals such as carriers or other transmission mechanisms, and may include any information delivery medium.

The present disclosure provides a control method for a terminal device, a terminal device, and a storage medium. In the present disclosure, in the case that a to-be-detected control channel unit set and a target control channel unit set are detected to have an overlapping control channel unit and the energy of the target control channel unit set is not higher than a predetermined energy threshold, an energy detection of the to-be-detected control channel unit set is stopped, whereby the number of invalid detections can be reduced, thereby reducing the amount of computation and power consumption of the terminal device, and thereby further optimizing the endurance of the terminal device.

It should be understood that the term "and/or" as used in this specification and the appended claims refers to and includes any combination and all possible combinations of one or more of the items listed in association. It is to be noted that, as used herein, the terms "include", "comprise" or any other variant thereof, are intended to cover non-exclusive inclusion, such that a process, method, article, or system comprising a set of elements includes not only those elements, but also other elements that are not explicitly listed, or that are inherent to such a process, method, article or system. Without further limitation, an element defined by the phrase "includes a ......" does not preclude the existence of additional identical elements in the process, method, article, or system that includes that element.

The above serial numbers in the present disclosure are for descriptive purposes only and do not represent the advantages or disadvantages of the embodiments. The foregoing are only specific embodiments of the present disclosure, but the scope of protection of the present disclosure is not limited thereto, and any person skilled in the art can easily think of various equivalent modifications or substitutions within the scope of the technology disclosed herein, which shall be covered by the scope of protection of the present disclosure. Therefore, the scope of protection of the present disclosure shall be governed by the scope of protection of the claims.

**Claims**

1. A control method for a terminal device, comprising:

   determining whether there is an overlapping control channel unit between a to-be-detected control channel unit set and a target control channel unit set, wherein an aggregation level of the target control channel unit set is lower than an aggregation level of the to-be-detected control channel unit set; and
   there being no need to perform, in the case that there is an overlapping control channel unit between the to-be-detected control channel unit set and the target control channel unit set, and that an energy of the target control channel unit set is not higher than a predetermined energy threshold, energy detection on the to-be-detected control channel unit set.

2. The control method according to claim 1, wherein, before determining whether there is an overlapping control channel unit between a to-be-detected control channel unit set and a target control channel unit set, the method further comprising:

determining a target control channel unit set based on an aggregation level of each control channel unit set, wherein the aggregation level of the target control channel unit set is lower than an aggregation level of other sets of control channel units;
performing energy detection on the target control channel unit set, and decoding, in the case that the energy of the target control channel unit set is higher than the predetermined energy threshold, the target control channel unit set; and
there being no need to perform, in the case that the target control channel unit set is decoded successfully, energy detection on the to-be-detected control channel unit set.

3. The control method according to claim 1, wherein, after determining whether there is an overlapping control channel unit between a to-be-detected control channel unit set and a target control channel unit set, the method further comprising:

taking, in the case that there is no overlapping control channel unit between the to-be-detected control channel unit set and the target control channel unit set, the to-be-detected control channel unit set as the target control channel unit set;
performing energy detection on the target control channel unit set; and
decoding, in the case that the energy of the target control channel unit set is higher than a predetermined energy threshold, the target control channel unit set.

4. The control method according to claim 1, wherein, after determining that there is an overlapping control channel unit between the to-be-detected control channel unit set and the target control channel unit set, the method further comprising:

performing, in the case that the energy of the target control channel unit set is higher than the predetermined energy threshold, energy detection on the to-be-detected control channel unit set; and
decoding, in the case that an energy of the to-be-detected control channel unit set is higher than the predetermined energy threshold, the to-be-detected control channel unit set.

5. The control method according to claim 1, wherein, the target control channel unit set comprises a first control channel unit set and a second control channel unit set, an aggregation level of the first control channel unit set is lower than an aggregation level of the second control channel unit set, the aggregation level of the second control channel unit set is lower than the aggregation level of the to-be-detected control channel unit set, the method further comprising:

determining whether there is an overlapping control channel unit between the to-be-detected control channel unit set and the first control channel unit set and/or the second control channel unit set; and
there being no need to perform, in the case that there is an overlapping control channel unit between the to-be-detected control channel unit set and the first control channel unit set and an energy of the first control channel unit set is not higher than the predetermined energy threshold, energy detection on the to-be-detected control channel unit set; or
there being no need to perform, in the case that there is an overlapping control channel unit between the to-be-detected control channel unit set and the second control channel unit set and an energy of the second control channel unit set is not higher than the predetermined energy threshold, energy detection on the to-be-detected control channel unit set; or
there being no need to perform, in the case that there is an overlapping control channel unit both between the to-be-detected control channel unit set and the first control channel unit set, and between the to-be-detected control channel unit set and the second control channel unit set respectively, and each of the energy of the first control channel unit set and the energy of the second control channel unit set is not higher than the predetermined energy threshold, energy detection on the to-be-detected control channel unit set.

6. The control method according to claim 2, wherein, before determining a target control channel unit set based on an aggregation level of each control channel unit set, the method further comprising:

acquiring a configuration parameter of a control resource set corresponding to a predetermined search space, and determining a set of aggregation levels corresponding to the predetermined search space; and
determining one or more sets of control channel units at each aggregation level based on the configuration parameter and the set of aggregation levels.

7. The control method according to claim 1, wherein, before determining whether there is an overlapping control channel unit between a to-be-detected control channel unit set and a target control channel unit set, the method further comprising:

determining a candidate time-frequency position corresponding to one or more sets of control channel units at each aggregation level;
sorting the one or more sets of control channel units at each aggregation level based on the candidate time-frequency position and the aggregation level, to obtain a sorting result; and
detecting the one or more sets of control channel units at each aggregation level sequentially based on the sorting result.

8. The control method according to claim 1, wherein, determining whether there is an overlapping control channel unit between a to-be-detected control channel unit set and a target control channel unit set comprising:

determining whether a signal strength of the terminal device exceeds a predetermined signal strength threshold; and
determining, in the case that the signal strength of the terminal device is detected to exceed the predetermined signal strength threshold, whether there is an overlapping control channel unit between the to-be-detected control channel unit set and the target control channel unit set.

9. The control method according to claim 8, wherein, after determining whether the signal strength of the terminal device exceeds the predetermined signal strength threshold, the method further comprising:
performing blind detection, in the case that the signal strength of the terminal device is detected to not exceed the predetermined signal strength threshold, on the to-be-detected control channel unit set and the target control channel unit set.

10. A terminal device, comprising:
a processor, a memory, a computer program stored on the memory and executable by the processor, and a data bus for implementing connection communication between the processor and the memory, wherein the computer program when executed by the processor implements the steps of the control method for terminal device according to any one of claims 1 to 9.

11. A storage medium, for computer-readable storage, the storage medium storing one or more programs, the one or more programs being executable by one or more processors to implement the steps of the control method for terminal device according to any one of claims 1 to 9.

determine whether there is an overlapping control channel unit between a to-be-detected control channel unit set and a target control channel unit set, wherein an aggregation level of the target control channel unit set is lower than an aggregation level of the to-be-detected control channel unit set

S101

in the case that there is an overlapping control channel unit between the to-be-detected control channel unit set and the target control channel unit set, and that an energy of the target control channel unit set is not higher than a predetermined energy threshold, there is no need to perform energy detection on the to-be-detected control channel unit set

S102

FIG. 1

FIG. 2a

FIG. 2b

FIG. 2c

FIG. 3

FIG. 4

**INTERNATIONAL SEARCH REPORT**

| International application No. |
|---|
| **PCT/CN2022/114941** |

| A. | CLASSIFICATION OF SUBJECT MATTER |
|---|---|

H04W 52/02(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 控制信道单元, 集合, 目标, 重合, 重叠, 聚合等级, 聚合度, 能量, 小于, 大于, 不高于, 检测, 解码, 搜索空间, 下行控制信道, control channel element, CCE, set, target, overlap, aggregation level, energy, detect, decode, search space, PDCCH

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112333121 A (UNISOC (CHONGQING) TECHNOLOGY CO., LTD.) 05 February 2021 (2021-02-05) description, paragraphs [0053]-[0161] | 1-11 |
| A | CN 107205273 A (ZTE CORP.) 26 September 2017 (2017-09-26) entire document | 1-11 |
| A | CN 108282306 A (HUAWEI TECHNOLOGIES CO., LTD.) 13 July 2018 (2018-07-13) entire document | 1-11 |
| A | WO 2013099268 A1 (SHARP K. K.) 04 July 2013 (2013-07-04) entire document | 1-11 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 October 2022** | **16 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/114941**

| Patent document cited in search report | | | Publication date (day/month/year) | Patent family member(s) | Publication date (day/month/year) |
|---|---|---|---|---|---|
| CN | 112333121 | A | 05 February 2021 | None | |
| CN | 107205273 | A | 26 September 2017 | None | |
| CN | 108282306 | A | 13 July 2018 | None | |
| WO | 2013099268 | A1 | 04 July 2013 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111333919